# EUROPÄISCHE PATENTSCHRIFT

(11) **EP 0 717 417 B1**
(45) Veröffentlichungstag und Bekanntmachung des Hinweises auf die Patenterteilung: **10.06.1998**
(21) Anmeldenummer: 95119481.0
(22) Anmeldetag: 11.12.1995
(51) Int. Cl.: G21C 19/37, G21F 9/30, G21D 1/00

(54) **Verfahren zum Zerlegen sperriger Teile von Druckbehälter-Einbauten einer kerntechnischen Anlage**
Process for cutting bulk parts of internal components of a pressure vessel in a nuclear plant
Procédé pour déchiqueter les parties encombrantes des composants d'un récipient sous pression dans une installation nucléaire

(30) Priorität: 16.12.1994 DE 4445168
(43) Veröffentlichungstag der Anmeldung: 19.06.1996
(73) Patentinhaber: ABB Reaktor GmbH, D-68167 Mannheim (DE)
(72) Erfinder: Dietrich, Alban, D-67454 Hassloch (DE)
(74) Vertreter: Rupprecht, Klaus, Dipl.-Ing.

(56) Entgegenhaltungen:
- EP-A- 0 529 886
- DD-A- 222 997
- DE-A- 3 603 092
- US-A- 4 818 472
- US-A- 5 239 564
- PATENT ABSTRACTS OF JAPAN vol. 018, no. 373 (P-1769), 13.Juli 1994 & JP-A-06 102398 (HITACHI LTD), 15.April 1994,

## Beschreibung

Die Erfindung betrifft ein Verfahren zum Zerlegen sperriger Teile von Druckbehältereinbauten einer kerntechnischen Anlage in transportfähige Teilgrößen nach dem Oberbegriff des Anspruchs 1.

Ein derartige Verfahren ist aus der DD 222 997 A1 bekannt. Dort wird ein aus mehreren Absorberstäben bestehendes Absorberelement aus einem Druckwasserreaktor-Brennelement in einen Umladebehälter gezogen. Eine Decke ist mit mehreren Umladeschächten versehen, in die jeweils ein oben offener Endlagerungsbehälter eingesetzt ist. Auf der Stirnseite des Endlagerungsbehälters ist eine Trenneinrichtung abgestellt, auf deren Oberseite der Umladebehälter mit dem Absorberelement ruht. Das Absorberelement wird nun ein vorgebbares Maß in den Endlagerungsbehälter eingefahren und mit der Trenneinrichtung abgeschert. Unterhalb der Decke ist ein Transportbehälter positioniert, in den der beladene Endlagerungsbehälter eingesetzt wird. Das Verfahren nach der DD 222 997 Al erfordert ein sehr tiefes Wasserbecken, da oberhalb der Trenneinrichtung der mindestens 4m lange Umladebehälter angeordnet ist, oberhalb dessen aus Abschirmungsgründen noch eine ausreichende Wasserabdeckung von mehreren Metern erforderlich ist. Ferner ist das Vorhalten von mehreren Behältern (Umlade-, Endlagerungs- und Transportbehälter) erforderlich.

Aus der DE 40 31 153 A1 ist eine Anlage zum Zerkleinern von Brennelementkästen bekannt. Der Brennelementkasten wird in einen Einführungsschacht eingebracht und stützt sich am Boden einer Schlittenführungskammer ab. Ein Scherschlitten trennt einen Teil des Brennelementkastens ab und schiebt den abgetrennten Teil zu einer Abwurfeinrichtung. Unterhalb der Abwurfeinrichtung ist ein Behälter angeordnet, der die abgetrennten Teil aufnimmt.

Es stellt sich die Aufgabe, ein Verfahren der eingangs genannten Art anzugeben, das mit wenigen Behältern und einer geringen Wasserbeckentiefe auskommt.

Gelöst wird diese Aufgabe erfindungsgemäß durch die im Kennzeichen des Patentanspruches angegebene Merkmalskombination.

Dabei dient zur Aufnahme des sperrigen Teiles während des Trennvorganges der zum späteren Zeitpunkt sowieso erforderliche Transportbehälter, so daß eine aufwendige Haltevorrichtung für den sperrigen Teil und die auf dem Transportbehälter abgestützte Trenneinrichtung entfallen. Ferner entfällt das Hochheben des sperrigen Teiles bis oberhalb der Stirnseite des Transportbehälters, so daß stets eine ausreichende Wasserüberdeckung gewährleistet ist.

Anhand eines Ausführungsbeispieles und der schematischen Fig. 1 bis 3 wird das erfindungsgemäße Verfahren beschrieben. Dabei zeigt die:
- Fig. 1: einen aus dem Druckbehälter bereits entnommenen Kernbehälter in seiner aufrechtstehenden Stellung,
- Fig. 2: einen Querschnitt eines geöffneten Transportbehälters mit dem eingesetzten Kernbehälter und eine Trenneinrichtung und
- Fig. 3: einen Querschnitt durch einen geschlossenen Transportbehälter.

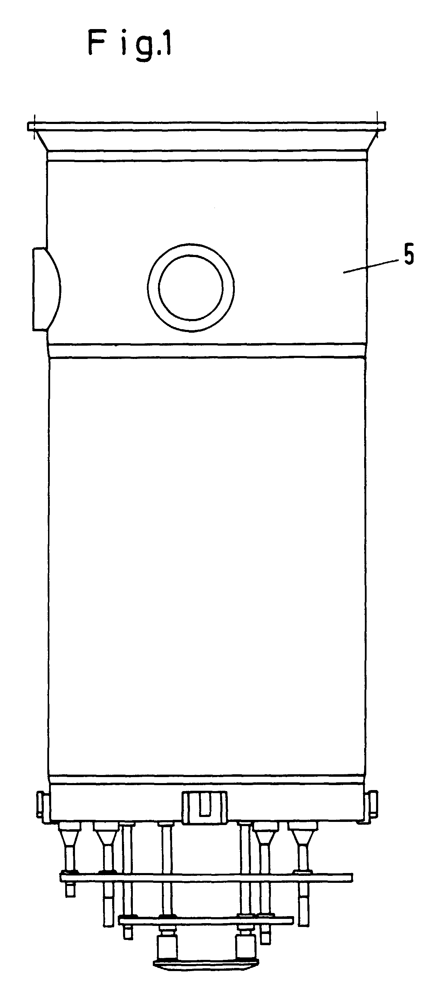

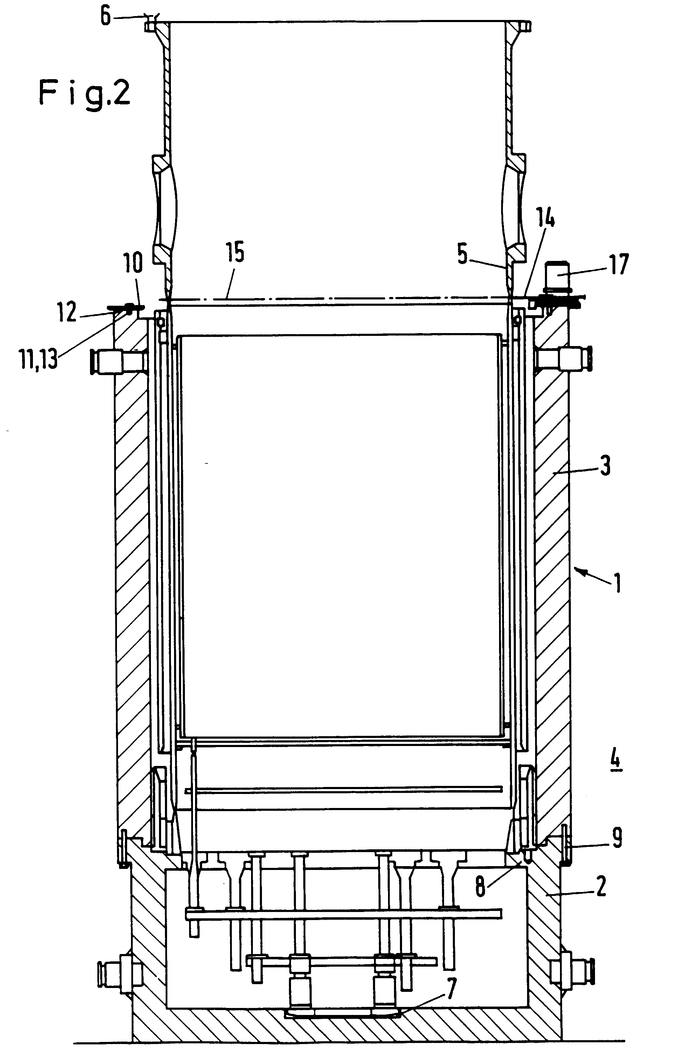

Die Fig. 1 zeigt einen Kernbehälter 5, der den sperrigsten Teil der Kerneinbauten darstellt und einen Außendurchmesser von ca. 4 m und eine Längserstreckung von ca. 10 m aufweisen kann. Wie aus der Fig. 2 ersichtlich ist, dient ein geöffneter Transportbehälter 1 als Aufnahmevorrichtung für den Kernbehälter 5 während des Zerlegungsvorganges. Der aus einem Bodenteil 2 und einem zylindrischen Mantelteil 3 gebildete Transportbehälter 1 ist in einem Wasserbecken 4 abgestellt. Nach dem der Bodenteil 2 am Boden des Wasserbeckens 4 abgestellt ist, wird mit Hilfe eines mit 6 angedeuteten Hebezeuges der Kernbehälter 5 in das Bodenteil eingesetzt. In einer Ausnehmung 7 de Bodenteils 2 ist der Kernbehälter abgestützt, während er im Bereich eines Flansches 8 des Bodenteils 2 seine seitlich abstützende Zentrierung erfährt. Durch das Einbringen des Kernbehälters bei entferntem Mantelteil 3 ist eine ausreichende Wasserabdeckung beim Einsetzen in den Bodenteil 2 gewährleistet. Nach dem der Kernbehälter seine Position im Bodenteil 2 eingenommen hat, wird mit Hilfe des Hebezeuges 6 der Mantelteil 3 achsparallel zum Kernbehälter 5 abgesenkt und nach dem Aufsetzen auf dem Bodenteil 2 eine Schraubverbindung 9 hergestellt. Jetzt wird eine Rundschiene 10 zur Aufnahme einer Trenneinrichtung 17 auf der freien Stirnseite 12 des Mantelteils 3 abgesetzt und mit in die der Stirnseite zugeordneten Gewindebohrungen 11 eingreifenden Verankerungselemente 13 relativ zum Mantelteil 3 und somit zum Transportbehälter 1 festgelegt. Die Trenneinrichtung wird entlang der Rundschiene 10 bewegt und durchtrennt dabei mit Hilfe eines Trennwerkzeuges 14 den Kernbehälter 5 entlang der strichpunktiert angedeuteten Trennlinie 15. Während des Trennvorganges bleibt das Hebezeug 6 am Kernbehälter 5 angeschlagen. Damit wird zum einen die stabile Anordnung des Kernbehälters während des Trennvorganges und nach dem Beenden des Trennvorganges ein sofortiges Halten des abgetrennten Teiles sichergestellt. Das abgetrennte Teil kann unmittelbar in einen weiteren Transportbehälter eingesetzt oder am Boden des Wasserbeckens 4 abgestellt werden.

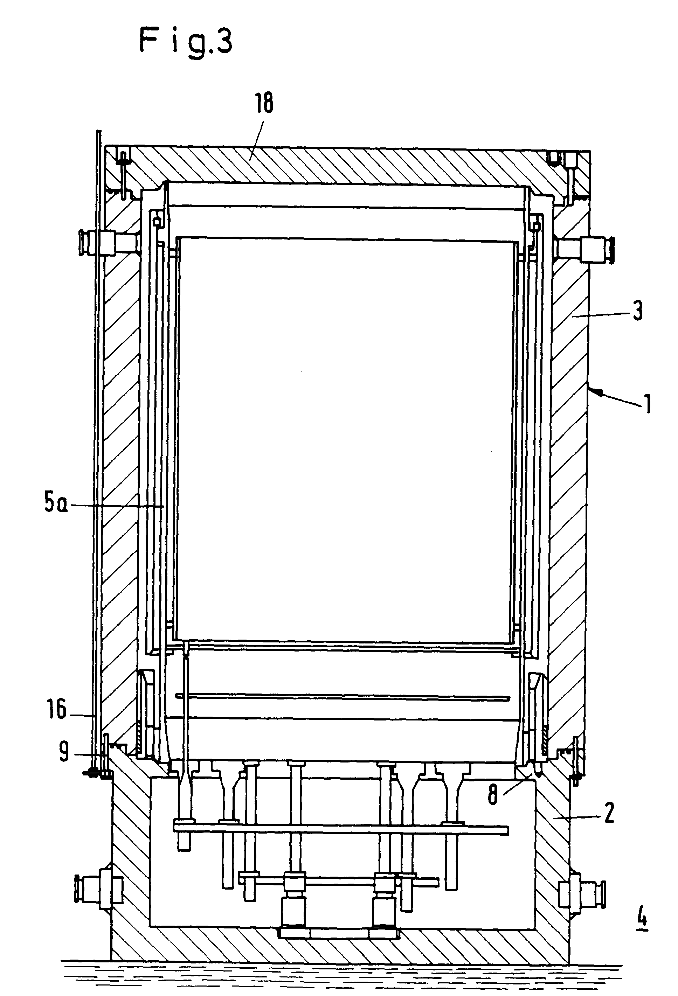

Wie aus der Fig. 3 ersichtlich ist, wird das im Transportbehälter 1 nach der Trennung verbliebene Unterteil 5a des Kernbehälters 5 dort belassen und der Transportbehälter 1 mit einem Deckel 18 verschlossen. Damit wird die Zerlegung des Kernbehälters in zwei den Transportbehältermaßen angepaßte Teile ohne zusätzliche Halteelemente für den Kernbehälter verwirklicht. Ein fernbedienbares Werkzeug zum Herstellen oder Lösen der Schraubverbindung 9 ist mit 16 bezeichnet.

## Patentansprüche

1. Verfahren zum Zerlegen sperriger Teile (5) von Druckbehälter-Einbauten einer kerntechnischen Anlage in transportfähige Teilgrößen, wobei
a) der sperrige Teil (5) in einen geöffneten Transportbehälter (1) eingesetzt wird und um ein vorgebbares Maß eine Stirnseite (12) des Transportbehälters (1) überragt,
b) eine Trenneinrichtung auf der Stirnseite (12) des Transportbehälters (1) abgestützt und relativ zum Transportbehälter festgelegt wird und
c) der sperrige Teil (5) oberhalb der Stirnseite (12) durchtrennt wird,
dadurch gekennzeichnet, daß das Einsetzen des sperrigen Teils in den Transportbehälter von Schritt a) in folgenden Teil schritten erfolgt:
a1) ein aus einem Bodenteil (2) und einem Mantelteil (3) bestehender Transportbehälter (1) wird verwendet,
a2) der Bodenteil (2) wird am Boden eines Wasserbeckens (4) abgestellt,
a3) der sperrige Teil (5) wird in das Bodenteil (2) eingesetzt und
a4) der Mantelteil (3) wird muffenartig über den eingesetzten sperrigen Teil (5) bis zum Kontakt mit dem Bodenteil (2) verfahren und mit ihm verbunden.

## Claims

1. Method for dismantling bulky parts (5) of pressure-vessel fittings of a nuclear plant into transportable part-sizes,
a) the bulky part (5) being inserted into an open transport container (1) and projecting by a predeterminable amount above an end face (12) of the transport container (1),
b) a separating device being supported on the end face (12) of the transport container (1) and being fixed relative to the transport container, and
c) the bulky part (5) being separated above the end face (12),
characterized in that the bulky part is inserted into the transport container of step a) in the following sub-steps:
a1) a transport container (1) consisting of a bottom part (2) and of a casing part (3) is used,
a2) the bottom part (2) is set down on the bottom of a water tank (4),
a3) the bulky part (5) is inserted into the bottom part (2), and
a4) the casing part (3) is moved in a sleeve-like manner over the inserted bulky part (5) up to contact with the bottom part (2) and is connected to it.

## Revendications

1. Procédé de découpage d'éléments encombrants (5) de structures de cuves sous pression d'une installation nucléaire en des éléments avec des dimensions permettant leur transport,
a) l'élément encombrant (5) étant placé dans un conteneur de transport (1) ouvert et dépassant d'une dimension prédéterminée par rapport à une face frontale (12) du conteneur de transport (1),
b) un dispositif de coupe prenant appui sur la face frontale (12) du conteneur de transport (1) et immobilisé fixé par rapport audit conteneur de transport et
c) l'élément encombrant (5) étant coupé au-dessus de la face frontale (12),
caractérisé par le fait que la mise en place selon l'étape "a)" de l'élément encombrant dans le conteneur de transport a lieu conformément aux étapes secondaires suivantes:
a1) on utilise un conteneur de transport (1) comprenant une partie fond (2) et une partie enveloppe (3),
a2) on dépose la partie fond (2) sur le fond d'une piscine (4),
a3) on place l'élément encombrant sur la partie fond (2) et
a4) on fait descendre la partie enveloppe (3) à la manière d'un manchon sur l'élément encombrant (5) jusqu'à ce qu'elle vienne en contact avec la partie fond (2) et on la lie à ladite partie fond.
